Europäisches Patentamt

European Patent Office

Office européen des brevets

(11) Publication number: **0 253 685**
**A1**

## (12) EUROPEAN PATENT APPLICATION

(21) Application number: **87306387.9**

(22) Date of filing: **17.07.87**

(51) Int. Cl.⁴: **G 01 N 35/06**

(30) Priority: **17.07.86 GB 8617508**

(43) Date of publication of application:
**20.01.88 Bulletin 88/03**

(84) Designated Contracting States:
**AT BE CH DE ES FR GB GR IT LI LU NL SE**

(71) Applicant: **FLOW LABORATORIES LIMITED.**
**P.O. Box 17 Second Avenue, Ind. Estate**
**Irvine Ayrshire Scotland KA12 8NB (GB)**

(72) Inventor: **Freeman, Richard Harry Mark**
**29 Bellevue Road**
**AYR, Ayrshire Scotland KA7 2SA (GB)**

**Yeudall, Abram David**
**11 Struthers Place Barrasie**
**Troon Ayrshire Scotland (GB)**

(74) Representative: **Brereton, Paul Arthur et al**
**REDDIE & GROSE 16 Theobalds Road**
**London WC1X 8PL (GB)**

(54) **Liquid handling station.**

(57) The present invention relates to a liquid handling station for carrying out automated test and analysis procedures on liquid samples and sample solutions, which station comprises a carriage 1 for carrying receptacles and means for moving the carriage in a horizontal plane along X and Y axes, and a dispense module 20 having a holder 50 for removably holding one or more disposable syringes 52 and means operable to control vertical (Z axis) movement of the syringe plungers 24. It may be controlled by microprocessor to carry out a cycle of test analysis procedures in which receptacles placed on the carriage are brought to a location below the disposable syringes for sampling, diluting and dispensing. The dispense module may be mounted for vertical (P axis) movement and the liquid handling station may also comprise means for lifting the dispense module which allows the dispense module with the holder and the syringes to be moved vertically relative to the carriage. This enables the syringes to be lowered into receptacles such as test tubes for drawing up quantities of liquid. There may be movement on more than one axis at the same time: it is particularly advantageous if the vertical movement of the dispense module is controlled relative to the rate of syringe plunger movement on the Z axis so that liquid is drawn into the syringe at a rate corresponding to the rate of lowering the syringe into the receptacle thereby allowing, for instance constant liquid-surface penetration by the syringe tip during filling.

FIG. 6

**Description**

<div align="center">

LIQUID HANDLING STATION

</div>

The present invention relates to a liquid handling station for carrying out automated test and analysis procedures on liquid samples and sample solutions.

Many analytical procedures in laboratories, especially in the field of biochemical and microbiological identification or quantification, depend on handling small volumes of active substances in solution. As examples of such active substances there are bacteria, enzymes, hormones and human fluids.

A known type of liquid handling station has individual reservoirs for the reagent and sample and a syringe in each reservoir operable to draw up a precise amount of liquid from its reservoir and dispense the liquid through a manifold to a common outlet tip or nozzle. A variant on this type of station has a single syringe serving both the sample and reagent reservoirs and a valve system for selectively connecting the syringe to each reservoir. Interchangeable syringes (often referred to as cassettes) may be used in order to cover a wide range of volumes. Devices are known which have motors for operating the syringe and motors for moving the dispensing nozzle to different positions above a test location, for example a microplate. The motors can be computer controlled to carry out a cycle of operations such as diluting, dispensing and titrating at the test location. A disadvantage of known devices is their inflexibility; if a new reagent or sample is to be handled the reservoirs, syringes and interconnecting tubing must be flushed clean. In cases where live organisms, such as pathogenic bacteria, are handled the whole device may need to be disinfected or sterilized.

According to the present invention a liquid handling station for carrying out test and analysis procedures with liquids comprising a carriage for carrying receptacles and means for moving the carriage in a horizontal plane, and a dispense module having a holder for removably holding at least one disposable syringe and means for moving the syringe plunger vertically. The liquid handling station may be controlled by control means, for example, a microprocessor which is preprogrammed or is programmable to operate the carriage moving means and the plunger moving means in sequence to carry out a cycle of test analysis procedures in which receptacles placed on the carriage are brought to a location below the disposable syringes for sampling, diluting and dispensing.

The dispense module may be mounted for vertical movement and the liquid handling station may also comprise means for lifting the dispense module which allows the dispense module with the holder and the syringes to be moved vertically relative to the carriage. This enables the syringes to be lowered into receptacles such as test tubes for drawing up quantities of liquid. Stepper motors are particularly desirable for providing drive on the horizontal and vertical axes since they can provide rapid yet accurate movement and can stop and start sharply. The acceleration, running speed and deceleration of the drive on each axis may be controlled by a microprocessor.

There may be movement on more than one axis at the same time: it is particularly advantageous in a liquid handling station according to the invention if the vertical movement of the dispense module is controlled relative to the rate of syringe plunger movement on the vertical axis so that liquid is drawn into the syringe at a rate corresponding to the rate of lowering the syringe into the receptacle thereby allowing, for instance, constant liquid-surface penetration by the syringe tip during filling.

Syringe plunger movement can, for example, be achieved by the use of a spiral cam accurately machined to avoid backlash and cooperating with roller bearings coupled to the plunger. The plunger can be moved rapidly up or down by rotating the cam at high speed with a stepper motor, the rolling bearings producing little friction. Movement can be stopped sharply and accurately so as to dispense precise quantities of liquid without the formation of droplets. Small droplets existing at the syringe tip can be eliminated by a small upward movement of the plunger.

According to the invention in another aspect apparatus for dispensing liquids comprises a syringe mounted in a holder and means for moving the plunger of the syringe, the plunger moving means comprising a stepper motor coupled to drive a spiral cam, and a cam follower engaging the spiral cam and coupled to the plunger of the syringe. Alternatively the plunger moving means may comprise a stepper motor coupled to drive a rolled thread ballscrew, and a ball nut engaging the ballscrew and coupled to the plunger of the syringe.

A liquid handling station according to the invention is particularly suitable for use in microtitration techniques such as microplate based biochemical test kits for identification of e.g. enterobacteriaceae and other oxidase negative, Gram negative bacteria.

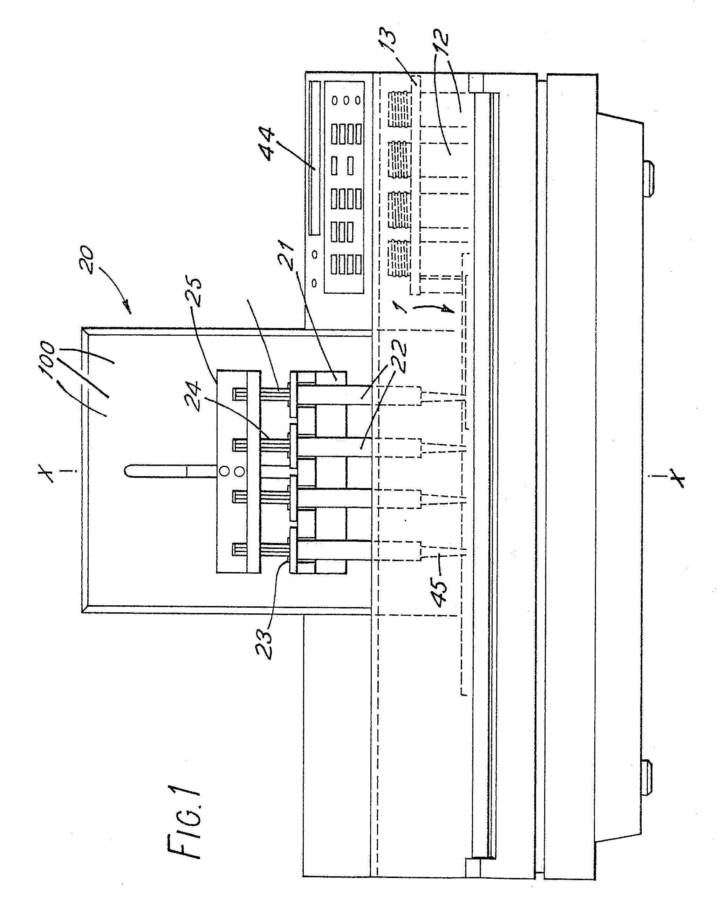

Apparatus according to the invention and its use will now be described by way of example only with reference to the accompanying drawings in which : FIGURE 1 is a front view of a liquid handling station according to one embodiment of the invention;

FIGURE 2 is a schematic section on line X-X of FIG. 1;

FIGURE 3 is a schematic drawing of a spiral cam for use in a device according to the invention;

FIGURE 4 is a schematic drawing of a second embodiment of a device according to the invention;

FIGURE 5A and B are schematic drawings of a syringe holder magazine for use in the invention;

FIGURE 6 is a schematic drawing of a third embodiment of a device according to the invention;

FIGURE 7 is a top view of the FIG. 6 device illustrating means for clamping a syringe holder magazine;

FIGURE 8 is a schematic perspective view illustrating the clamping means;

FIGURE 9A and B are schematic drawings of a syringe cap remover for use in the invention;

<div align="center">

2

</div>

FIGURES 10 A-H diagramatically illustrate the use of the syringe cap remover of FIGS. 9A and B in the invention.

Throughout the description the same reference numerals are used to refer to like structures.

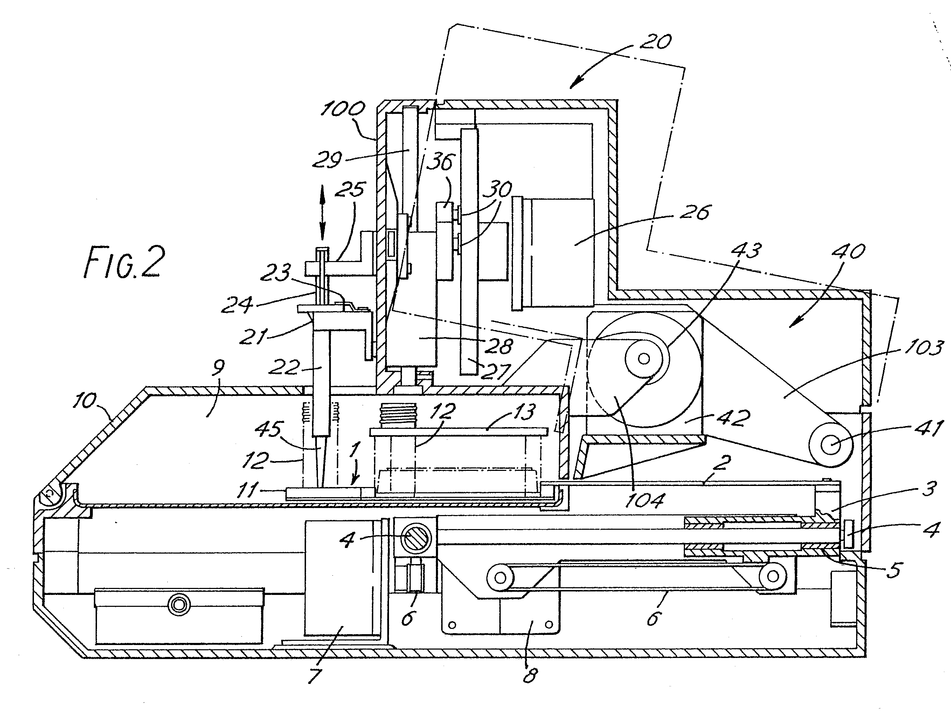

The liquid handling station of Figs. 1 and 2 has a carriage 1 attached by a rigid arm 2 to a follower 3 moveable on guide rails 4 fixed to the base of the liquid handling station. The follower 3 is supported by linear guidance bushes 5 for smooth running. The follower 3 and attached carriage 1 are movable along the guide rails in a horizontal plane by belts 6 driven by stepper motors 7, 8. The stepper motor 7 controls the position of the carriage along the X axis and stepper motor 8 controls its position along the Y axis. The carriage 1 is accommodated within a liquid handling area 9 having a hinged protective cover 10. On the carriage 1 is placed the microplate 11 of a biochemical microtitration test kit and a rack 13 holding a number of receptacles such as vials 12. The vials may contain, for example, disinfectant or suitable reagents for use in analysis or test procedures, or may be empty for receiving waste liquids.

A dispense module 20 has a syringe holder magazine 21 fixed to a front plate 100. Four "Eppendorf Combitip" [TM] plastics disposable syringes 22 are removably clipped to the holder 21 by spring plates 23. The plungers 24 of the syringes 22 are held in a plunger holder 25 which can move up and down relative to the syringe holder 21 to operate the plungers of the syringes in unison.

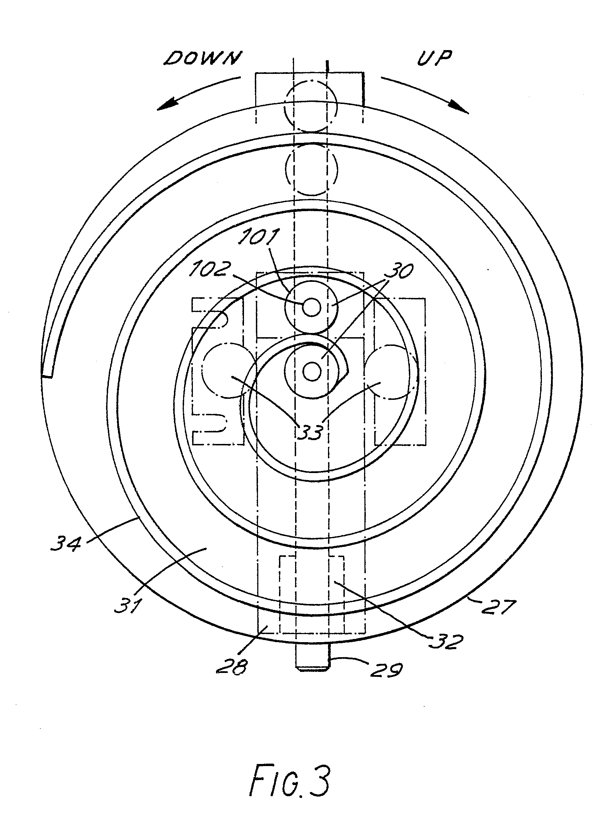

Referring now to Figs. 2 and 3, the plunger holder 25 is fixed to a sleeve 28 by a bracket which passes through a slot in the front plate 100. The sleeve can slide up and down on a vertical guide rod 29 fixed to the front plate. The sleeve has ball bushings 32 which engage the surface of the guide rod 29 in order to minimise friction in the vertical Z axis movement of the plunger holder, and ball bearing guide rollers 33 on the rear of the front plate 100 engage the outside of the sleeve for accurately guiding the vertical movement of the sleeve.

Vertical movement of the sleeve 28 on the rod and thus Z-axis movement of the plunger holder 25 is produced by a stepper motor 26 which has a spiral cam 27 attached to its drive shaft. Cam followers 30 in the form of two ball bearings 101 mounted on two parallel stub shafts 102 projecting from the sleeve 28 engage the spiral pathway 31 on the cam 27. The pathway 31 is accurately machined in order to avoid backlash; the width of the dividing wall 34 between adjacent turns of the pathway 31 increases as the radius of the curvature of the pathway increases to compensate for the change in the angle of contact between the ball bearing follers 30 as the cam rotates so that the followers both make contact with opposite sides of the wall 34 throughout the length of the pathway. One or both of the followers 30 may have adjuster means 36 for backlash elimination during setting up of the station. The followers 30, sleeve 28, plunger holder 25 and attached plungers 24 can be moved rapidly up or down by rotating the cam 27 at high speed with the stepper motor 26. The dispense module 20 has a dispense module lifting mechanism 40 which allows the dispense module 20 to be raised and lowered vertically (P axis) relative to the carriage 1. Lowering and raising the dispense module 20 with the lift 40 does not effect operation of plungers 24 in the syringes 22. The dispense module 20 is mounted on side plates 103 which are pivoted on a horizontal shaft 41. A stepper motor 42 mounted on the dispense module 20 has a spiral cam 43 which is engaged by followers 104 on the base of the liquid handling station. By operating the motor 42 the module 20 can be tilted through an angle of about 11 degrees around the pivot axis of the shaft 41, thus raising and lowering the dispense module. A microprocessor and keyboard and display panel 44 are used to control the functions of the liquid handling station. If the microprocessor is preprogrammed the user merely has to press instruction keys in response to displayed prompts and to load the correct syringes, microplates and vials as indicated by displayed directions.

There may be movement on more than one of the X, Y, Z and P axes at the same time: for example, by lowering the dispense module lift 40 synchronously with the raising of the plunger holder 25 of the dispense module 20 to draw liquid from vials 12 into syringes 22, a constant liquid-surface penetreation by the syringe tips 45 is achieved. This may be desirable, for example to prevent wetting of the outside of the syringe nozzle.

An example of how the apparatus might be used will now be described.

Bacterial colonies are cultured on a semi-solid growth medium, e.g. Agar gel. The liquid handling station is programmed to mix and inoculate samples of a bacterial suspension four at a time into a microplate in a cycle time of around 45 seconds. The technician picks up 4 bacterial colonies on the the tips of Eppendorf type syringe plungers 24, closes the syringes 22 and clips them into the holder 21, 25 on the dispense module. A microplate 11 and vial rack 13 containing vials filled with dilution fluid are placed on the carriage 1. The cycle runs according to the following sequence:

1]  Carriage 1 moves first row of vials 12 to location immediately below the syringes on the dispense module 20 by operating the stepper motor 7.       X

2]  The dispense module lifting mechanism 40 is operated by energising the stepper motor 42, to lower the dispense module 20 so that the syringe nozzles 45 just penetrate the dilution fluid.       P

3]  The mixing routine takes place. The syringes draw up and expel fluid a programmed number of times. The dispense module moves up and down on the P axis to minimise and maintain constant the surface penetration of the syringe nozzles while the plungers of the syringes are moved up and down on the Z axis by operating the stepper motors 42 and 26 in synchronism. The mix routine finishes with the syringes full of a bacterial suspension for inoculation.       Z and P

4]  Dispense module 20 lifted up by operating the stepper motor 42.       P

5]  Any drops of liquid on the syringe tips 45 are sucked up by a small upward movement on the plungers 24, using the stepper motor 26.       Z

6]  The carriage 1 moves the microplate 11 to a location immediately below the dispense module 20 by operating the motor 7.       X

7]  The dispense module 20 is lowered to just above the microplate 11 by operating the stepper motor 42.       P

8]  The dispense routine takes plate on 24 wells of the microplate. It consists of a large movement down on Z axis to dispense inoculate into a set of 4 wells followed by a small movement up to suck up any drops and a delay to allow the

> liquid to enter the well followed by a movement on the X/Y axis to bring the next set of 4 wells below the syringe tips.     X, Y, Z

9] The dispense module 20 is raised.     P

10] The carriage 1 moves so that the dispense module 20 is above the vials 12.     X/Y

11] Excess inoculate is ejected into the vials 12 by downward movement of the plungers - any drops on the syringe tips are sucked back into the syringes by small upward movement of the plungers.     Z

12] The carriage 1 moves to a home position.     X/Y

On the following cycle a second row of dilution vials is used, thus the technician needs only to replace the syringes and the vials between cycles. The next set of syringes can be prepared while the liquid handling station is in operation.

Various safety features can be incorporated in the microprocessor control such as, for example, a verification sequence to inhibit the cycle if, for instance, the carriage is not at the home position or if a new rack of vials is required.

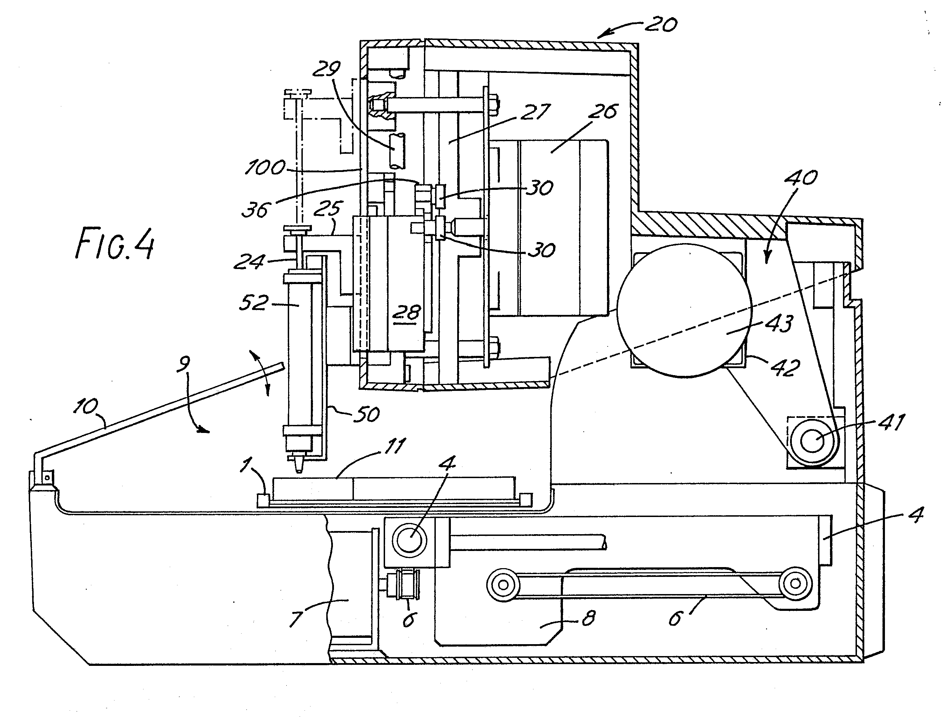

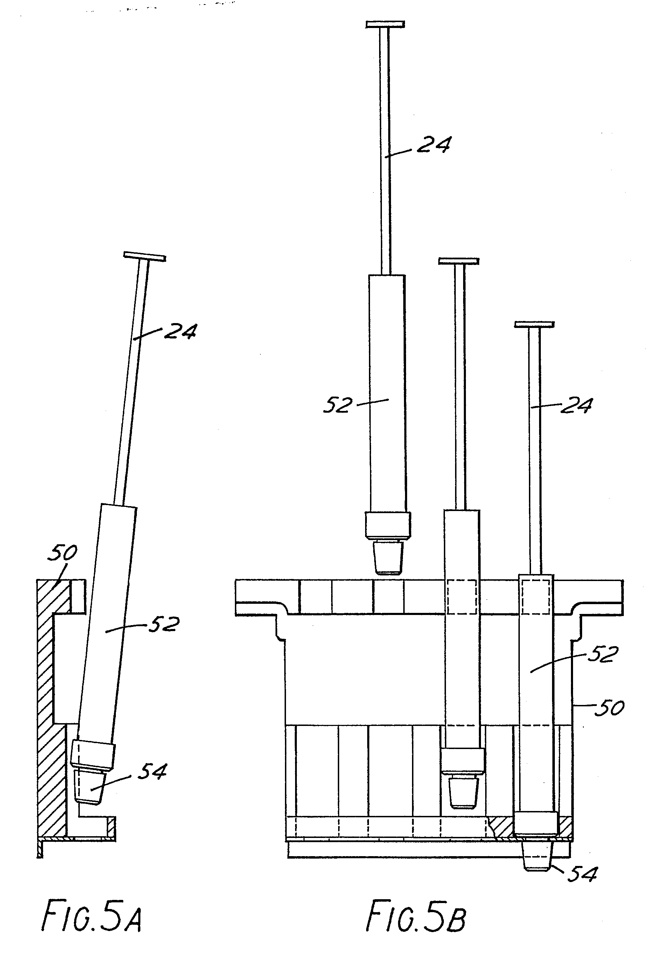

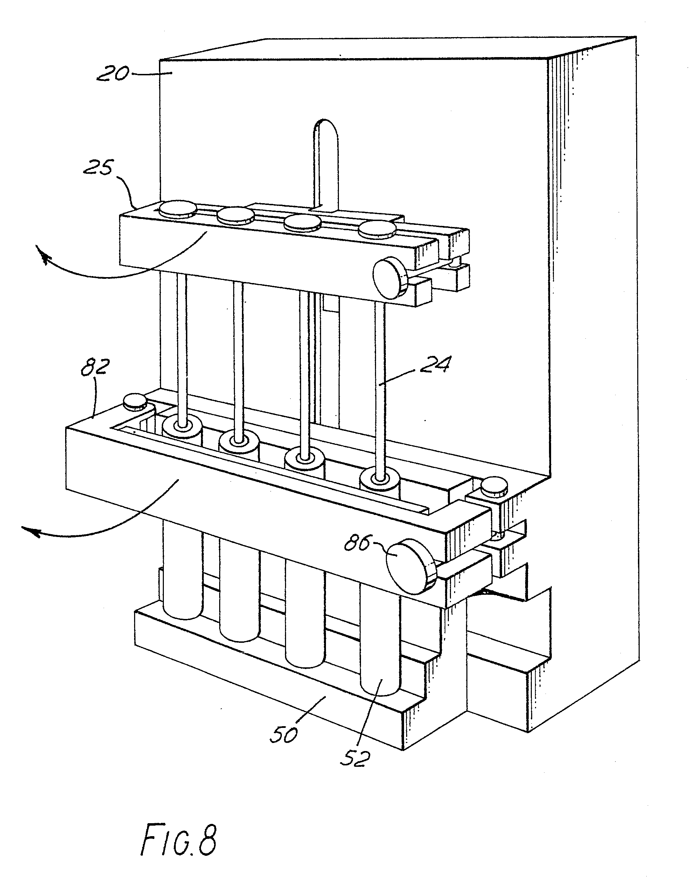

The liquid handling station exemplified in Figs. 4-8 has a syringe holder magazine 50 for a number of "Starstedt Monovette" [TM] plastics disposable syringes 52 which are particularly suitable for inoculating a bacterial suspension into the wells of a microplate 11 in order to carry out tests for the minimum inhibitory concentration [MIC] of various antibiotics on the bacteria. As shown in Figures 5A and 5B, these syringes are placed in the holder magazine 50 preloaded with reagent or inoculant, and in order to eliminate the risk of spillage the syringe has a cap 54 which must be removed before test and analysis procedures are carried out, and replaced after the cycle is complete.

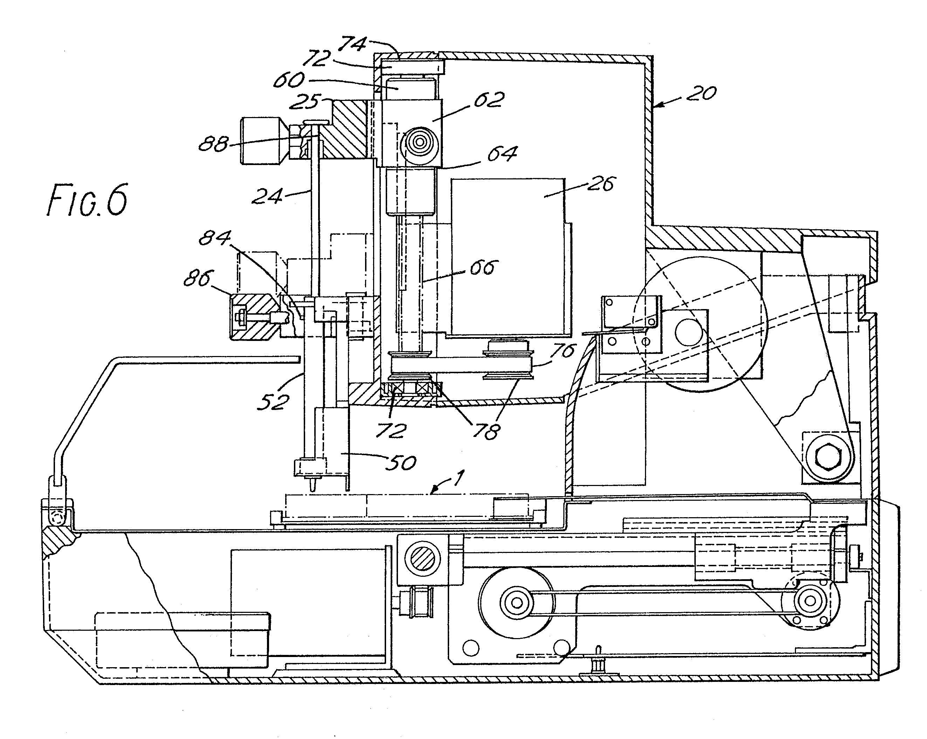

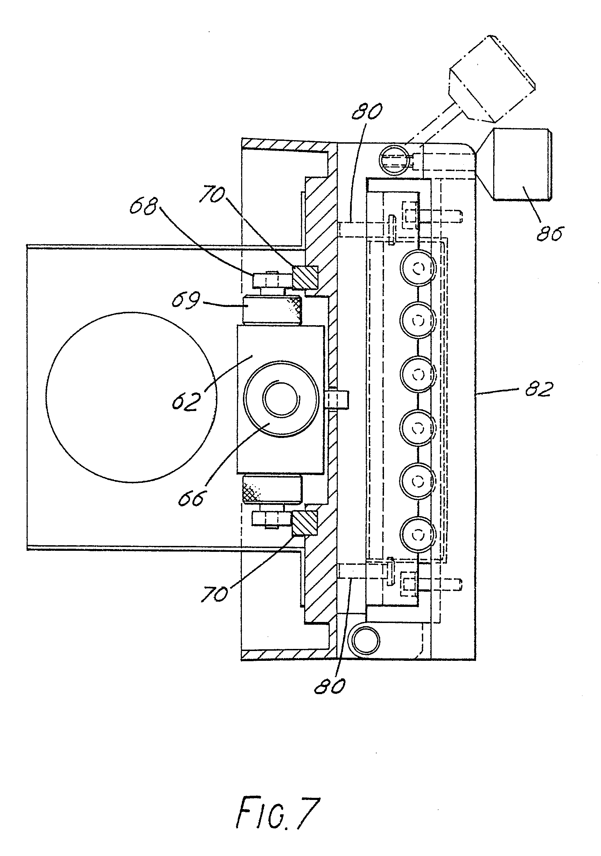

The liquid handling station exemplified in Figures 6 and 7 is similar to those of Figures 1 to 4. However in this embodiment movement of the syringe plungers 24 on the Z axis is achieved by use of a low cost rolled thread ballscrew arrangement. Two ball nuts 60 are mounted in a common housing 62. In order to eliminate backlash a variable spacer is fitted after assembly and checking of the required dimension. The ballscrew 66 provides longitudinal guidance of the housing 62 in conjunction with two ball bearings 68 which are mounted on eccentric holders 69. The ball bearings run on machined guides 70. The eccentric holders allow the housing 62 to be aligned with minimal angular clearance. The ballscrew 66 is mounted on two ball bearing housings 72. Axial clearance within the ball bearings is eliminated using a variable spacer 74. In this way any backlash in the ball nut assembly is eliminated. The ballscrew is driven by a step motor 26 via a timing belt 76 and pulleys 78. In this way the rotational movement of the step motor is accurately translated to linear movement on the Z axis.

Furthermore, as shown in Figures 6, 7 and 8 this embodiment is provided with means for locating and clamping a syringe holder magazine 50. A magazine is located on pins 80 and a clamp arm 82 is hinged across to clamp on the syringes 52 and hold the magazine 50 firmly in position. The particular magazine shown is for "Sarstedt" type syringes 52. Different designs of magazine would accept different numbers or types of syringe designs (e.g. "Eppendorf Combitip" syringes 22). Mounted on the inside of the syringe clamp is a circular rubber pad 84 to accommodate small variations in syringe dimensions. The clamp arm 82 is held in position by a pivoting locking handle 86 which can be unclamped easily to speed up syringe magazine removal and replacement.

The plunger holder 25 has a similar hinged clamp and locking mechanism to clamp the syringe piston rods. In this case a machined knife edge 88 bites into the syringe plunger 24 to grip the plunger and ensure that it moves immediately the drive arrangement moves.

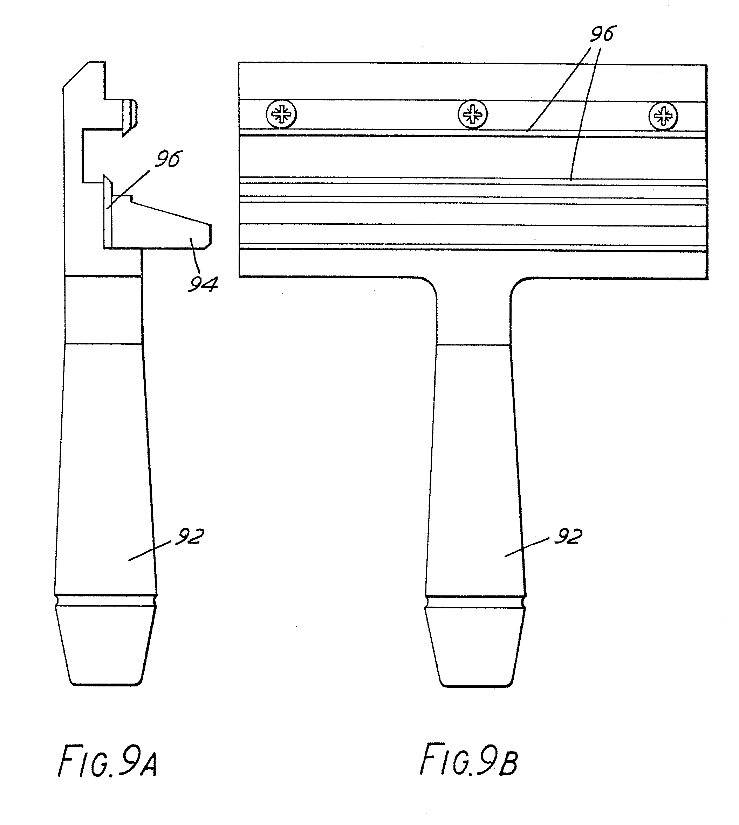

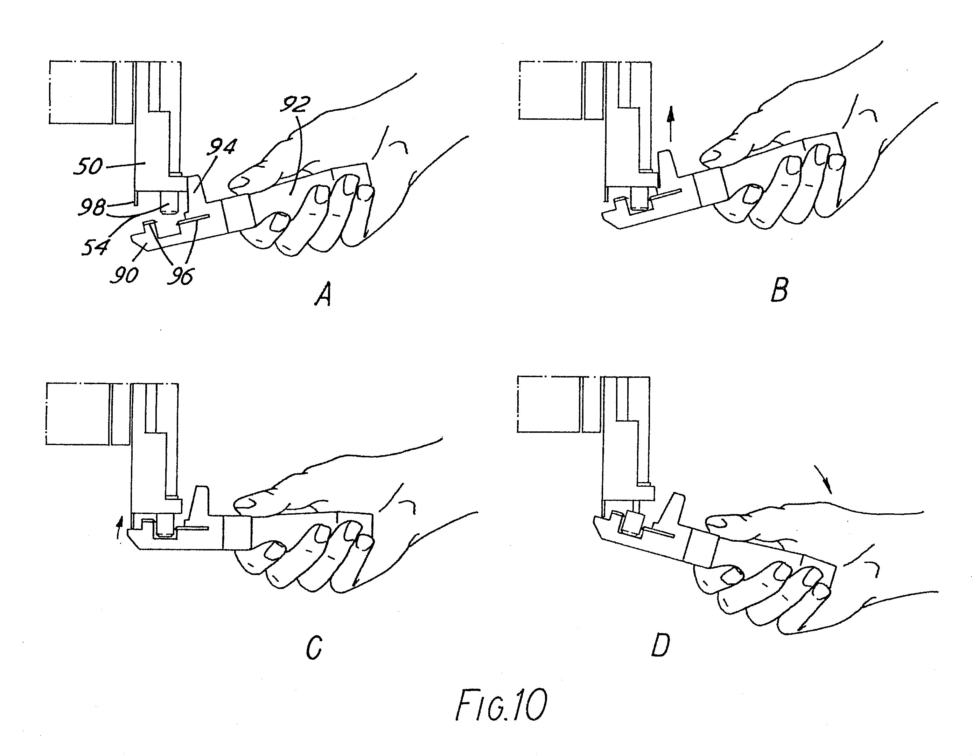

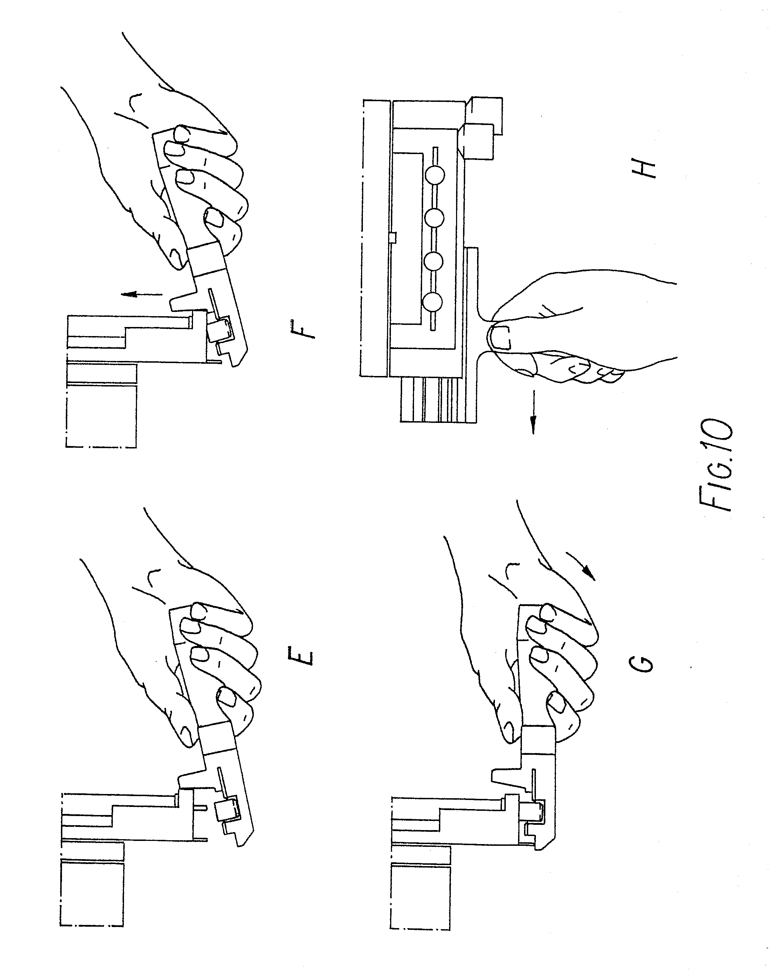

Once the syringes 52 are mounted on the station, syringe cap removal must be carried out without risk of inadvertent spillage on the machine or the operator. A syringe cap remover is used, as described below with reference to Figures 9 and 10.

The syringe cap remover comprises a main body 90, a handle 92, a location block 94 and a pair of opposed blades 96. The separation of the blades is arranged so that a syringe cap may be gripped between them. The use of the syringe cap remover for removing and replacing syringe caps is illustrated in Figure 10 A-H. To remove a cap the following steps are carried out:

A) The syringe cap remover is positioned with the location block 94 against the syringe holder magazine 50,

B) the cap remover is slid gently upwards until it comes to rest against the bottom face of the magazine 50,

C) whilst maintaining a slight upward force the cap remover is pivoted downwardly until it is horizontal and in contact with the pivot point 98,

D) pivoting downwardly against the pivot point 98 is continued until a cap 54 is released from the syringe and is held between the blades 96.

Steps C) and D) should be carried out in a single smooth movement. To replace a cap the following steps are carried out:

E) the loaded cap remover is positioned with the location block 94 against the front face of the magazine 50,

F) the cap remover is gently slid upwards until it comes to rest against the bottom face of the magazine 50,

G) whilst maintaining a slight upwards force the cap remover is pivoted downwardly until it is horizontal and in contact with the pivot point 98,

H) whilst maintaining the upward force the remover is slid to one side until it is clear of the magazine.

Using the cap remover a number of caps may be removed or replaced simultaneously.

Some advantages of a liquid handling station according to this invention are :

a] Speed; repetitive cyclic test operations can be carried out rapidly.

b] Precision; necessary for reproducible results. Fine control of Stepper motors by microprocessor means that microplate inoculation does not require a skilled operator.

c] Certainty; once the correct cycle is chosen the appropriate amount of liquid is delivered to the correct location, operator error is eliminated.

d] Complex procedures can be programmed; for example serial dilutions can be made under automatic control and, for example, bacterial colonies in semi-solid form can be mixed and diluted with reagent.

e] Cross-contamination risk is removed; the use of cheap disposable plastics syringes obviates the need for flushing, disinfecting, sterilizing of apparatus between bacterial batches.

f] Flexibility: interchangeable syringe holders can be provided for different numbers and different types of plastics disposable syringes.

## Claims

1. A liquid handling station for carrying out test and analysis procedures with liquids comprising a carriage for carrying receptacles and means for moving the carriage in a horizontal plane, and a dispense module having a holder for removably holding at least one disposable syringe and means for moving of the syringe plunger vertically.

2. A liquid handling station according to claim 1 including control means for operating the carriage moving means and the plunger moving means in sequence to carry out a cycle of test analysis procedures in which receptacles placed on the carriage are brought to a location below the disposable syringes for sampling, diluting and dispensing.

3. A liquid handling station according to claim 1 or 2 in which the dispense module is mounted for vertical movement and including means for lifting the dispense module which allows the dispense module to cause the dispense module with the holder and the syringe to be moved vertically relative to the carriage.

4. A liquid handling station according to claim 3 in which the control means controls the vertical movement of the dispense module relative to the rate of syringe plunger movement so that liquid may be drawn into a syringe at a rate corresponding to the rate of lowering the syringe into a receptacle thereby allowing constant liquid-surface penetration by the syringe tip during filling.

5. A liquid handling station according to any preceding claim in which the plunger moving means comprises a stepper motor coupled to drive a spiral cam, and a cam follower engaging the spiral cam and coupled to the plunger of the syringe.

6. A liquid handling station according to any of claims 1 to 4 in which the plunger moving means comprises a stepper motor coupled to drive a rolled thread ballscrew, and a ball nut engaging the ballscrew and coupled to the plunger of the syringe.

7. A liquid handling station according to any preceding claim for use with a microplate based biochemical test kit for identification of bacteria.

8. A liquid handling station according to any of the preceding claims in which the syringe holder holds more than one syringe and the plunger moving means moves the plungers of the syringes in unison.

9. A liquid handling station according to any preceding claim in which the syringe holder comprises a removable magazine for holding more than one syringe, the station being provided with means for locating and securing the magazine to the dispense module.

10. A liquid handling station according to any of the preceding claims in which the carriage moving means comprise stepper motors arranged to move the carriage along two horizontal axes at right angles to one another.

FIG.1

FIG.2

FIG.3

FIG.4

24

50

52

54

24

52

24

52

50

54

FIG.5A          FIG.5B

FIG.6

0253685

FIG.7

0253685

FIG.8

0253685

FIG.9A

FIG.9B

A

B

C

D

FIG.10

0253685

E

F

G

H

FIG.10

0253685

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 478 094 (K. SALOMAA et al.)<br>* Column 3, line 55 - column 4, line 18; figures 1-3 * | 1-3,6, 8 | G 01 N 35/06 |
| Y | EP-A-0 046 461 (Dr. W. STÖCKER)<br>* Abstract * | 1-3,6, 8 | |
| A | US-A-3 853 011 (H. BAUMANN)<br>* Abstract * | 4 | |
| A | FR-A-2 359 403 (H. SENELONGE)<br>* Page 7, lines 25-29; figure 7 * | 5 | |
| A | DE-A-2 731 536 (SOCIETE FRANCAISE POUR LE DEVELOPPEMENT DE L'AUTOMATISME EN BIOLOGIE)<br>* Page 7, lines 16-26; figure 2 * | 6 | **TECHNICAL FIELDS SEARCHED (Int. Cl.4)**<br><br>G 01 N<br>B 01 L |
| A | EP-A-0 009 013 (LKB CLINICON AKTIEBOLAG)<br>* Page 4, line 29 - page 5, line 17, figure * | 6 | |
| A | US-A-3 687 632 (S. NATELSON)<br>* Column 4, lines 13-29; column 10, line 53 - column 11, line 40; figures 1,6 * | 10 | |

The present search report has been drawn up for all claims

| Place of search | Date of completion of the search | Examiner |
|---|---|---|
| THE HAGUE | 27-10-1987 | ANTHONY R.G. |